# EUROPEAN PATENT APPLICATION

(11) **EP 4 583 448 A1**
(43) Date of publication of application: **09.07.2025**
(21) Application number: 23870235.1
(22) Date of filing: 06.09.2023
(51) Int. Cl.: H04L 5/00

(54) **RADAR INFORMATION TRANSMISSION METHOD, APPARATUS AND SYSTEM**

(30) Priority: 29.09.2022 RU 2022125472
(71) Applicant: Shenzhen Yinwang Intelligent Technologies Co., Ltd., Shenzhen, Guangdong 518129 (CN)
(72) Inventor: SONG, Sida, Shenzhen, Guangdong 518129 (CN); MA, Sha, Shenzhen, Guangdong 518129 (CN); ZHANG, Hui, Shenzhen, Guangdong 518129 (CN); QIN, Boya, Shenzhen, Guangdong 518129 (CN)
(74) Representative: Gill Jennings & Every LLP
(86) International application number: PCT/CN2023/117335
(87) International publication number: WO 2024/066996

(57) **Abstract**

This application provides a radar information transmission method, an apparatus, and a system, to reduce interference between radars, and relates to the field of wireless communication technologies. In the method, a first device receives a first radar signal that carries information from at least one device. The first device obtains first parsing data based on the first radar signal. The first device determines information from a second device based on a location of one or more information points indicated by the first parsing data in the first parsing data. According to this solution, the first device and the second device can use a radar signal to carry information, to implement information transmission between radars, thereby avoiding mutual interference.

## Description

This application claims priority to Russian Patent Application No. 2022125472, filed with the China National Intellectual Property Administration on September 29, 2022 and entitled "RADAR INFORMATION TRANSMISSION METHOD, APPARATUS, AND SYSTEM", which is incorporated herein by reference in its entirety.

### TECHNICAL FIELD

This application relates to the field of wireless communication technologies, and in particular, to a radar information transmission method, an apparatus, and a system.

### BACKGROUND

With development of society, more machines in modern life develop toward automation and intelligentization, and vehicles used for mobile traveling are no exception. Intelligent vehicles are gradually entering daily life of people. In recent years, an advanced driver assistance system (advanced driver assistance system, ADAS) plays an important role in the intelligent vehicle. For the ADAS, in a traveling process of the vehicle, various sensors installed on the vehicle are used to sense a surrounding environment at any time, collect data, identify, detect, and track static and moving objects, and perform systematic operation and analysis with reference to map data of a navigator, so that a driver can be aware of a possible danger in advance, to effectively improve driving comfort and safety of the vehicle.

In a self-driving architecture, a sensing layer is compared to an "eye" of a vehicle, and includes vision sensors such as a vehicle-mounted camera, and radar sensors such as a vehicle-mounted millimeter-wave radar, a vehicle-mounted lidar, and a vehicle-mounted ultrasonic radar. The millimeter-wave radar is the first to become a main sensor in a self-driving system due to low costs and a mature technology. Currently, more than ten functions have been developed for the ADAS, and adaptive cruise control, automatic emergency braking, lane change assistance, blind spot monitoring, and the like are inseparable from the vehicle-mounted millimeter-wave radar.

With widespread use of vehicle-mounted radars, mutual interference between the vehicle-mounted radars is becoming increasingly serious. The mutual interference may reduce a detection probability of the vehicle-mounted radar or increase a false alarm probability of the vehicle-mounted radar, posing non-negligible impact to driving safety and comfort of the vehicle. On this premise, how to reduce interference between vehicle-mounted radars is a technical problem to be resolved urgently.

### SUMMARY

This application provides a radar information transmission method, an apparatus, and a system, to reduce interference between radars.

According to a first aspect, a radar information transmission method is provided. The method may be performed by a first device, or may be performed by a chip having a function similar to that of the first device. In the method, the first device receives a first radar signal. The first radar signal carries information from at least one device. The first device obtains first parsing data based on the first radar signal. The first parsing data indicates one or more information points, and the one or more information points correspond to a second device in the at least one device. The first device determines information from the second device based on a location of the one or more information points in the first parsing data.

According to the foregoing solution, the first device and the second device can use a radar signal to carry information, to implement information transmission between radars, thereby avoiding mutual interference. Compared with a related technology, in the foregoing technical solution, because no additional communication device needs to be installed, costs are low; in addition, because a complex waveform design does not need to be used, a processing velocity of a radar can be improved, to reduce a delay.

In a possible implementation, the first radar signal carries information from a third device, and the third device belongs to the at least one device. An information point corresponding to the third device is different from the information point corresponding to the second device. For example, all of one or more information points corresponding to the third device are different from any one of the one or more information points corresponding to the second device.

For example, the first device may receive first radar signals from a plurality of devices, and the first device may obtain the first parsing data based on the first radar signals from the plurality of devices. In the first parsing data, radar signals from different devices correspond to different one or more information points.

According to the foregoing solution, the first device can receive radar signals from the plurality of devices, to obtain information from the plurality of devices, thereby avoiding mutual interference.

In a possible implementation, the information from the second device includes one or more of the following: a start frequency of the second device, for example, a start frequency of an operating frequency band of the second device; a bandwidth of the second device, for example, an operating frequency band of the second device; time-frequency resource information of the second device, for example, a time-frequency resource number of the second device; start time at which the second device sends a radar signal; a period in which the second device sends a radar signal; or target information detected by the second device, for example, information about a target detected by the second device by transmitting a radar signal and receiving an echo signal. Optionally, the information from the second device may further include information that needs to be transmitted in an in-vehicle scenario, for example, a vehicle traveling intention. For example, the vehicle traveling intention may include information such as a left turn, a right turn, a lane change, a U turn, overtaking, a fault, or an emergency.

According to the foregoing solution, the information about the second device and/or the target information can be transmitted between devices by using the first radar signal, so that an effect of avoiding interference can be implemented.

In a possible implementation, the first device performs, based on a preset mark point in the information point indicated by the first parsing data, time-domain and frequency-domain synchronization correction on the indicated information point. Optionally, a pattern of the mark point may be agreed on by the first device and the second device, or predefined in a standard or a protocol. For example, the pattern of the mark point may be a special form, for example, a "cross" pattern. Similarly, a location of the mark point in the first parsing data may also be agreed on by the first device and the second device, or predefined in a standard or a protocol. For example, the location of the mark point may be in a center of the first parsing data.

According to the foregoing solution, the preset mark point can be used to perform time-domain and frequency-domain synchronization correction on the information point, so that impact of a timing error and a transmission delay on transmitted information can be reduced.

In a possible implementation, the first device receives a second radar signal. The second radar signal is used to detect a target. The first radar signal and the second radar signal occupy different frames. For example, a first frame may be used to send the first radar signal, and a second frame may be used to send the second radar signal. The first frame may include one or more first radar signals. For example, it is predefined in a standard or a protocol that each device may send the first radar signal within a time domain resource occupied by the first frame. Similarly, the second frame may include one or more second radar signals. For example, it is predefined in a standard or a protocol that each device may send the second radar signal within a time domain resource occupied by the second frame. In this way, each device can send the first radar signal within the time domain resource occupied by the first frame, and send the second radar signal within the time domain resource occupied by the second frame.

In a possible implementation, the first device receives a second radar signal. The second radar signal is used to detect a target. The first radar signal and the second radar signal occupy a same frame, and a time-frequency resource of the first radar signal is orthogonal to a time-frequency resource of the second radar signal. For example, a third frame may be used to send the first radar signal and the second radar signal. A first time-frequency resource occupied by the first radar signal is orthogonal to a second time-frequency resource occupied by the second radar signal.

According to the foregoing solution, a receive end can determine whether a received radar signal is a radar signal for detecting a target or a radar signal that carries information.

In a possible implementation, the first parsing data includes at least one of the following: range data, Doppler data, azimuth data, pitch data, two-dimensional range-Doppler data, range-Doppler-azimuth data, or range-Doppler-azimuth-pitch data.

According to the foregoing solution, an objective of carrying information by using a radar signal may be implemented based on the first parsing data, and information carried in the radar signal may be determined based on a location of an information point corresponding to the radar signal in the first parsing data, so that information transmission between radars may be implemented.

In a possible implementation, an initial frequency of the first radar signal is within a first bandwidth, the first bandwidth and a second bandwidth constitute an intermediate frequency bandwidth of the first device, and the first bandwidth and the second bandwidth do not overlap. For example, the first bandwidth plus the second bandwidth is equal to the intermediate frequency bandwidth.

The foregoing solution can prevent a radar signal from falling beyond an intermediate frequency bandwidth of a receiver after a spatial propagation delay due to factors such as a transmission delay, a timing error, and an intermediate frequency bandwidth limitation of the receiver.

In a possible implementation, the first device obtains the first radar signal in a second time interval, where the second time interval belongs to a first time interval. The first device obtains the first parsing data of the first radar signal in the second time interval.

The foregoing solution can prevent a case in which a bandwidth of a received signal falls beyond the intermediate frequency bandwidth of the first device due to factors such as the transmission delay, the timing error, and the intermediate frequency bandwidth limitation of the receiver, and frequency mixing of the received signal and a local oscillator signal is consequently affected.

According to a second aspect, a radar information transmission method is provided. The method may be performed by a second device, or may be performed by a chip having a function similar to that of the second device. In the method, the second device modulates first information to obtain a first signal. The second device performs frequency mixing on the first signal and a frequency modulated continuous wave to obtain a first radar signal. The second device sends the first radar signal.

According to the foregoing solution, the second device can modulate the first information to obtain the first signal, and perform frequency mixing on the first signal and the frequency modulated continuous wave to obtain the first radar signal, so that the information is carried in the radar signal, and information transmission between radars is implemented, to avoid mutual interference. Compared with a related technology, in the foregoing technical solution, because no additional communication device needs to be installed, costs are low; in addition, because a complex waveform design does not need to be used, a processing velocity of a radar can be improved, to reduce a delay.

In a possible implementation, the second device generates an information symbol based on the first information. The second device obtains a time domain information symbol through inverse fast Fourier transform based on the information symbol. The second device performs digital-to-analog conversion on the time domain information symbol to obtain the first signal.

According to the foregoing solution, the second device can modulate the first information to the first signal, to achieve an objective of carrying the information by using the radar signal.

In a possible implementation, the first information includes one or more of the following: a start frequency of the second device, for example, a start frequency of an operating frequency band of the second device; a bandwidth of the second device, for example, an operating frequency band of the second device; time-frequency resource information of the second device, for example, a time-frequency resource number of the second device; start time at which the second device sends a radar signal; a period in which the second device sends a radar signal; or target information detected by the second device, for example, information about a target detected by the second device by transmitting a radar signal and receiving an echo signal. Optionally, the first information may further include information that needs to be transmitted in an in-vehicle scenario, for example, a vehicle traveling intention. For example, the vehicle traveling intention may include information such as a left turn, a right turn, a lane change, a U turn, overtaking, a fault, or an emergency.

According to the foregoing solution, the information about the second device and/or the target information can be transmitted between devices by using the first radar signal, so that an effect of avoiding interference can be implemented.

In a possible implementation, the second device sends a second radar signal. The second radar signal is used to detect a target. The first radar signal and the second radar signal occupy different frames. For example, a first frame may be used to send the first radar signal, and a second frame may be used to send the second radar signal. The first frame may include one or more first radar signals. For example, it is predefined in a standard or a protocol that each device may send the first radar signal within a time domain resource occupied by the first frame. Similarly, the second frame may include one or more second radar signals. For example, it is predefined in a standard or a protocol that each device may send the second radar signal within a time domain resource occupied by the second frame. In this way, each device can send the first radar signal within the time domain resource occupied by the first frame, and send the second radar signal within the time domain resource occupied by the second frame.

In a possible implementation, the second device sends a second radar signal. The second radar signal is used to detect a target. The first radar signal and the second radar signal occupy a same frame, and a time-frequency resource of the first radar signal is orthogonal to a time-frequency resource of the second radar signal. For example, a third frame may be used to send the first radar signal and the second radar signal. A first time-frequency resource occupied by the first radar signal is orthogonal to a second time-frequency resource occupied by the second radar signal.

According to the foregoing solution, a receive end can determine whether a received radar signal is a radar signal for detecting a target or a radar signal that carries information.

In a possible implementation, an initial frequency of the first radar signal is within a first bandwidth, the first bandwidth and a second bandwidth constitute an intermediate frequency bandwidth of the first device, and the first bandwidth and the second bandwidth do not overlap. For example, the first bandwidth plus the second bandwidth is equal to the intermediate frequency bandwidth.

The foregoing solution can prevent a radar signal from falling beyond an intermediate frequency bandwidth of a receiver after a spatial propagation delay due to factors such as a transmission delay, a timing error, and an intermediate frequency bandwidth limitation of the receiver.

According to a third aspect, an apparatus is provided. The apparatus is configured to perform the method according to the first aspect or any one of the possible implementations of the first aspect. The apparatus includes a processing unit and a transceiver unit.

The transceiver unit is configured to receive a first radar signal. The first radar signal carries information from at least one device. The processing unit is configured to obtain first parsing data based on the first radar signal. The first parsing data indicates one or more information points, and the one or more information points correspond to a second device in the at least one device. The processing unit is further configured to determine information from the second device based on a location of the one or more information points in the first parsing data.

In a possible implementation, the first radar signal carries information from a third device, and the third device belongs to the at least one device. An information point corresponding to the third device is different from the information point corresponding to the second device. For example, the transceiver unit is specifically configured to receive first radar signals from a plurality of devices, and the processing unit is specifically configured to obtain the first parsing data based on the first radar signals from the plurality of devices. In the first parsing data, first radar signals from different devices correspond to different one or more information points.

In a possible implementation, the information from the second device includes one or more of the following: a start frequency of the second device, for example, a start frequency of an operating frequency band of the second device; a bandwidth of the second device, for example, an operating frequency band of the second device; time-frequency resource information of the second device, for example, a time-frequency resource number of the second device; start time at which the second device sends a radar signal; a period in which the second device sends a radar signal; or target information detected by the second device, for example, information about a target detected by the second device by transmitting a radar signal and receiving an echo signal. Optionally, the first information may further include information that needs to be transmitted in an in-vehicle scenario, for example, a vehicle traveling intention. For example, the vehicle traveling intention may include information such as a left turn, a right turn, a lane change, a U turn, overtaking, a fault, or an emergency.

In a possible implementation, the processing unit is further configured to perform, based on a preset mark point in the information point indicated by the first parsing data, time-domain and frequency-domain synchronization correction on the indicated information point. Optionally, a pattern of the mark point may be agreed on by the first device and the second device, or predefined in a standard or a protocol. For example, the pattern of the mark point may be a special form, for example, a "cross" pattern. Similarly, a location of the mark point in the first parsing data may also be agreed on by the first device and the second device, or predefined in a standard or a protocol. For example, the location of the mark point may be in a center of the first parsing data.

In a possible implementation, the transceiver unit is further configured to receive a second radar signal. The second radar signal is used to detect a target. The first radar signal and the second radar signal occupy different frames. For example, a first frame may be used to send the first radar signal, and a second frame may be used to send the second radar signal. The first frame may include one or more first radar signals. For example, it is predefined in a standard or a protocol that each device may send the first radar signal within a time domain resource occupied by the first frame. Similarly, the second frame may include one or more second radar signals. For example, it is predefined in a standard or a protocol that each device may send the second radar signal within a time domain resource occupied by the second frame.

In a possible implementation, the transceiver unit is further configured to receive a second radar signal. The second radar signal is used to detect a target. The first radar signal and the second radar signal occupy a same frame, and a time-frequency resource of the first radar signal is orthogonal to a time-frequency resource of the second radar signal. For example, a third frame may be used to send the first radar signal and the second radar signal. A first time-frequency resource occupied by the first radar signal is orthogonal to a second time-frequency resource occupied by the second radar signal.

In a possible implementation, the first parsing data includes at least one of the following: range data, Doppler data, azimuth data, pitch data, two-dimensional range-Doppler data, range-Doppler-azimuth data, or range-Doppler-azimuth-pitch data.

In a possible implementation, an initial frequency of the first radar signal is within a first bandwidth, the first bandwidth and a second bandwidth constitute an intermediate frequency bandwidth of the first device, and the first bandwidth and the second bandwidth do not overlap. For example, the first bandwidth plus the second bandwidth is equal to the intermediate frequency bandwidth.

In a possible implementation, the processing unit is further configured to obtain the first radar signal in a second time interval, where the second time interval belongs to a first time interval. The processing unit is specifically configured to obtain the first parsing data of the first radar signal in the second time interval.

According to a fourth aspect, an apparatus is provided. The apparatus is configured to perform the method according to the second aspect or any one of the possible implementations of the second aspect. The apparatus includes a processing unit and a transceiver unit.

The processing unit is configured to modulate the first information to obtain a first signal. The processing unit is further configured to perform frequency mixing on the first signal and a frequency modulated continuous wave to obtain a first radar signal. The transceiver unit is configured to send the first radar signal.

In a possible implementation, the processing unit is further configured to generate an information symbol based on the first information. The processing unit is further configured to obtain a time domain information symbol through inverse fast Fourier transform based on the information symbol. The processing unit is further configured to perform digital-to-analog conversion on the time domain information symbol to obtain the first signal.

In a possible implementation, the first information includes one or more of the following: a start frequency of the second device, for example, a start frequency of an operating frequency band of the second device; a bandwidth of the second device, for example, an operating frequency band of the second device; time-frequency resource information of the second device, for example, a time-frequency resource number of the second device; start time at which the second device sends a radar signal; a period in which the second device sends a radar signal; or target information detected by the second device, for example, information about a target detected by the second device by transmitting a radar signal and receiving an echo signal. Optionally, the first information may further include information that needs to be transmitted in an in-vehicle scenario, for example, a vehicle traveling intention. For example, the vehicle traveling intention may include information such as a left turn, a right turn, a lane change, a U turn, overtaking, a fault, or an emergency.

In a possible implementation, the transceiver unit is further configured to send a second radar signal. The second radar signal is used to detect a target. The first radar signal and the second radar signal occupy different frames. For example, a first frame may be used to send the first radar signal, and a second frame may be used to send the second radar signal. The first frame may include one or more first radar signals. For example, it is predefined in a standard or a protocol that each device may send the first radar signal within a time domain resource occupied by the first frame. Similarly, the second frame may include one or more second radar signals. For example, it is predefined in a standard or a protocol that each device may send the second radar signal within a time domain resource occupied by the second frame. In this way, each device can send the first radar signal within the time domain resource occupied by the first frame, and send the second radar signal within the time domain resource occupied by the second frame.

In a possible implementation, the transceiver unit is further configured to send a second radar signal. The second radar signal is used to detect a target. The first radar signal and the second radar signal occupy a same frame, and a time-frequency resource of the first radar signal is orthogonal to a time-frequency resource of the second radar signal. For example, a third frame may be used to send the first radar signal and the second radar signal. A first time-frequency resource occupied by the first radar signal is orthogonal to a second time-frequency resource occupied by the second radar signal.

In a possible implementation, an initial frequency of the first radar signal is within a first bandwidth, the first bandwidth and a second bandwidth constitute an intermediate frequency bandwidth of the first device, and the first bandwidth and the second bandwidth do not overlap. For example, the first bandwidth plus the second bandwidth is equal to the intermediate frequency bandwidth.

According to a fifth aspect, an embodiment of this application provides an apparatus. The apparatus may be the apparatus according to any one of the third aspect and the fourth aspect in the foregoing embodiments, or a chip disposed in the apparatus according to any one of the third aspect and the fourth aspect. The apparatus includes a communication interface and a processor, and optionally, further includes a memory. The memory is configured to store a computer program, instructions, or data. The processor is coupled to the memory and the communication interface. When the processor reads the computer program, the instructions, or the data, the apparatus is enabled to perform the method performed by the first device in any possible implementation of the first aspect, or the apparatus is enabled to perform the method performed by the second device in any possible implementation of the second aspect.

It should be understood that the communication interface may be implemented through an antenna, a feeder, a codec, or the like in the apparatus. Alternatively, if the apparatus is a chip disposed in a communication device at a transmit end or a communication device at a receive end, the communication interface may be an input/output interface of the chip, for example, an input/output pin. The apparatus may further include a transceiver that is used by the apparatus to communicate with another device. For example, when the apparatus is the first device, the another device is the second device; or when the apparatus is the second device, the another device is the first device.

According to a sixth aspect, this application provides an apparatus, including a logic circuit and an input/output interface.

For example, the input/output interface is configured to input a first radar signal. The first radar signal carries information from at least one device. The logic circuit is configured to obtain first parsing data based on the first radar signal. The first parsing data indicates one or more information points, and the one or more information points correspond to a second device in the at least one device. The logic circuit is further configured to determine information from the second device based on a location of the one or more information points in the first parsing data.

For example, the logic circuit is configured to modulate first information to obtain a first signal. The logic circuit is further configured to perform frequency mixing on the first signal and a frequency modulated continuous wave to obtain a first radar signal. The input/output interface is configured to output the first radar signal.

According to a seventh aspect, an embodiment of this application provides a chip system. The chip system includes a processor, may further include a memory, and is configured to implement the possible implementations of any one of the first aspect and the second aspect. In a possible implementation, the chip system further includes a memory, configured to store program instructions and/or data. The chip system may include a chip, or may include a chip and another discrete component.

According to an eighth aspect, an embodiment of this application provides a system. The system includes the apparatus according to any possible implementation of the third aspect and the apparatus according to any possible implementation of the fourth aspect.

According to a ninth aspect, this application provides a computer-readable storage medium. The computer-readable storage medium stores a computer program or instructions. When the computer program or the instructions are run, the method performed by the first device or the second device in the foregoing aspects is implemented.

According to a tenth aspect, a computer program product is provided. The computer program product includes computer program code or instructions. When the computer program code or the instructions are run, the method performed by the first device in the foregoing aspects is performed, or the method performed by the second device in the foregoing aspects is performed.

For beneficial effects of the third aspect to the tenth aspect and the implementations thereof, refer to descriptions of the beneficial effects of the method according to the first aspect and the second aspect and the implementations thereof.

### BRIEF DESCRIPTION OF DRAWINGS

FIG. 1 is a diagram of a linear change in a frequency of a frequency modulated continuous wave over time;
FIG. 2 is a diagram of a system according to an embodiment of this application;
FIG. 3 is a diagram of a possible application scenario according to an embodiment of this application;
FIG. 4 is an example flowchart of a radar information transmission method according to an embodiment of this application;
FIG. 5A is a diagram of an information matrix according to an embodiment of this application;
FIG. 5B is a diagram of a manner of generating a first radar signal according to an embodiment of this application;
FIG. 6 is a diagram of a first radar signal according to an embodiment of this application;
FIG. 7 is a diagram of a guard bandwidth according to an embodiment of this application;
FIG. 8 is a diagram of a first time interval according to an embodiment of this application;
FIG. 9 is a diagram of a manner of processing a first radar signal according to an embodiment of this application;
FIG. 10A is a diagram of first parsing data according to an embodiment of this application;
FIG. 10B is a diagram of time-domain and frequency-domain synchronization correction according to an embodiment of this application;
FIG. 11 is a diagram of inter-frame isolation according to an embodiment of this application;
FIG. 12 is a diagram of intra-frame isolation according to an embodiment of this application;
FIG. 13 is a diagram of range division multiple access according to an embodiment of this application;
FIG. 14 is a diagram of Doppler division multiple access according to an embodiment of this application;
FIG. 15 is a diagram of an application scenario according to an embodiment of this application;
FIG. 16 is a diagram of an RD map according to an embodiment of this application;
FIG. 17 is a diagram of a structure of an apparatus according to an embodiment of this application;
FIG. 18 is a diagram of a structure of an apparatus according to an embodiment of this application;
FIG. 19 is a diagram of a structure of an apparatus according to an embodiment of this application; and
FIG. 20 is a diagram of a structure of an apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.
(1) A radar may be also referred to as a radar apparatus, a detector, a radar detection apparatus, a radar signal sending apparatus, or the like. A working principle of the radar is that the radar transmits a signal (or referred to as a detection signal) and receives a reflected signal reflected by a target object, to detect a corresponding target object. The signal transmitted by the radar may be a radar signal. Correspondingly, the received reflected signal reflected by the target object may be also a radar signal.
(2) A sending period (or referred to as a transmit period or the like) is a period in which a radar transmits a radar signal of a complete waveform. A radar usually sends a radar signal in a plurality of frequency sweeping periods within consecutive duration.
(3) Fast time dimension and slow time dimension: Usually, a pulse radar transmits a periodic pulse sequence, a period of a pulse sequence is defined as a pulse repetition interval, and duration of each pulse is defined as a pulse period. For example, a frequency modulated continuous wave (frequency modulated continuous wave, FMCW) radar is a pulse radar, and transmits a periodic chirp (chirp) sequence. Duration of the chirp sequence may be referred to as a chirp period, and a period of the chirp sequence may be referred to as a chirp repetition interval.

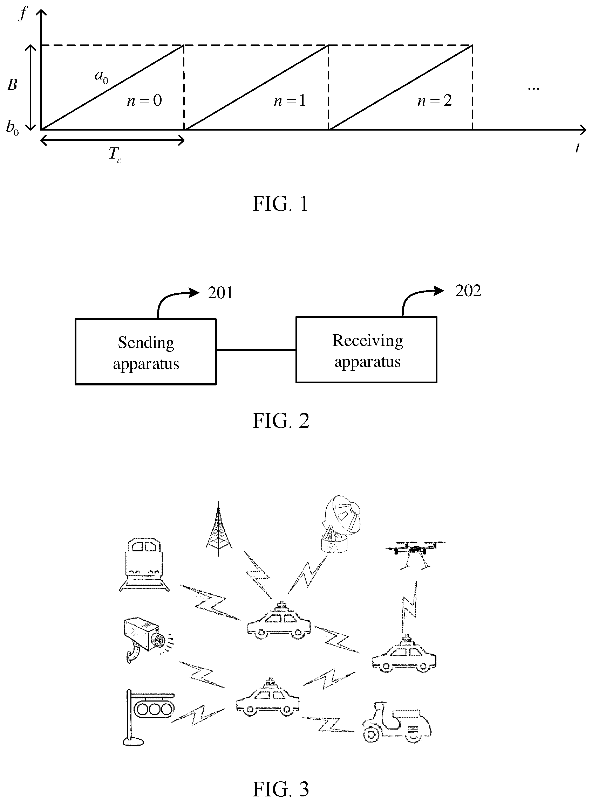

In order to facilitate processing of a radar signal, collection of radar data and building of a storage model need to be first performed. Intermediate frequency signals obtained after echo signals of each pulse sequence are frequency-mixed, filtered, and sampled are separately stored by row. For example, an intermediate frequency signal corresponding to a 1^{st} pulse sequence is placed in a first row, an intermediate frequency signal corresponding to a 2^{nd} pulse sequence is placed in a second row, and so on. In the storage model of radar data, a row-wise dimension is defined as the fast time dimension. A column-wise dimension is defined as the slow time dimension. For concepts of fast time and slow time, refer to descriptions in the conventional technology.
(4) Azimuth dimension and pitch dimension: For a multi-antenna radar, when radar data is collected and a storage model is constructed, two other dimensions are included, namely, an azimuth dimension and a pitch dimension. The azimuth dimension corresponds to data of a plurality of receive antennas in a horizontal direction, and the pitch dimension corresponds to data of a plurality of receive antennas in a vertical direction.
(5) Initial frequency: A radar transmits a radar signal at a frequency at the beginning of a sending period. The frequency is called an initial frequency of the radar. In addition, a transmit frequency of some radars changes in the transmit period based on the initial frequency. However, some radars transmit signals at a constant frequency, and a transmit frequency of such radars does not change in the transmit period.
(6) A bandwidth, or referred to as a frequency band, may be a frequency domain range.
(7) A frequency sweeping bandwidth indicates a bandwidth occupied by a waveform of a radar signal sent by a radar. It should be noted herein that "frequency sweeping bandwidth" is defined for ease of description, and is technically the bandwidth occupied by the waveform of the radar signal sent by the radar. Further, a frequency range occupied by the waveform of the radar signal sent by the radar may be referred to as a frequency sweeping range.
(8) FMCW is an electromagnetic wave whose frequency changes over time.
(9) A linear frequency modulated continuous wave is an electromagnetic wave whose frequency changes linearly over time. The linear change herein is generally a linear change in one transmit period. Specifically, a waveform of the linear frequency modulated continuous wave is generally a sawtooth wave or a triangular wave, or may be another possible waveform, for example, a linear frequency modulated frequency step waveform. The linear frequency modulated continuous wave is a signal that linearly changes over time. As shown in FIG. 1, in a frequency modulated continuous wave T_{c}, a slope is a₀, a bandwidth is B, and a start frequency is b₀.
(10) An intermediate frequency (intermediate frequency, IF) signal is a signal obtained after a frequency mixer processes a local oscillator signal of a radar and a reflected signal received by the radar (a signal obtained after a signal transmitted by the radar is reflected by a target object) and then transmits a processed signal to a low-pass filter. Specifically, a part of a frequency modulated continuous wave signal generated by an oscillator is used as a local oscillator signal, and another part of the frequency modulated continuous wave signal is used as a transmitted signal and is transmitted through a transmit antenna. Frequency mixing is performed on a reflected signal of the transmitted signal received through a receive antenna and the local oscillator signal, to obtain the "intermediate frequency signal". One or more pieces of location information, velocity information, or angle information of the target object may be obtained by using the intermediate frequency signal. The location information may be location information of the target object relative to a current radar. The velocity information may be velocity information of the target object relative to the current radar. The angle information may be angle information of the target object relative to the current radar. Further, a frequency of the intermediate frequency signal is referred to as an intermediate frequency.
(11) A millimeter wave is an electromagnetic wave whose wavelength ranges from 1 mm to 10 mm, and corresponds to a frequency range from 30 GHz to 300 GHz. This frequency band is very suitable for an in-vehicle field due to features related to the millimeter wave. A high bandwidth indicates abundant frequency domain resources and a low antenna side lobe, and is beneficial to implementing imaging or quasi-imaging. A small wavelength indicates that a size of a radar device and an antenna diameter are reduced, and therefore a weight is reduced. A narrow beam indicates that, in a same antenna size, a millimeter-wave beam is much narrower than a micrometer-wave beam, and therefore radar resolution is high. Strong penetration indicates that, compared with a lidar and an optical system, a millimeter-wave radar has a better capability of penetrating smoke, dust, and fog, and can work around the clock.
(12) "A plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of obj ects. For example, a first radar signal and a second radar signal are merely used to distinguish between different radar signals, but do not indicate that content, priorities, sending sequences, importance, or the like of the two radar signals are different.

The foregoing describes some concepts in embodiments of this application, and the following describes technical features in embodiments of this application.

FIG. 2 is a diagram of an architecture of a system according to an embodiment of this application. As shown in FIG. 2, the system includes a sending apparatus 201 and a receiving apparatus 202.

It should be understood that the system provided in embodiments of this application is applicable to both a low-frequency scenario (sub 6G) and a high-frequency scenario (above 6G). An application scenario of the system provided in embodiments of this application includes but is not limited to a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) system, a 5th generation (5th generation, 5G) system, a new radio (new radio, NR) system, or the like.

It should be understood that, in this embodiment of this application, the sending apparatus 201 may be an apparatus having a wireless transceiver function, and can communicate with one or more receiving apparatuses 202. The sending apparatus 201 may be deployed on land, including an indoor or outdoor apparatus, a handheld apparatus, or a vehicle-mounted apparatus, may be deployed on the water (for example, on a ship), or may be deployed in the air (for example, on an airplane, a balloon, or a satellite). For example, the sending apparatus 201 in this embodiment of this application may be user equipment (user equipment, UE), a terminal (terminal), a mobile station (mobile station, MS), a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), and the like. The sending apparatus 201 may alternatively be a communication chip that has a communication module and that can perform compression, encoding, and formatted bitstream conversion on audio data.

It should be understood that, in this embodiment of this application, the receiving apparatus 202 may be an apparatus having a wireless transceiver function, and can communicate with one or more sending apparatuses 201. The receiving apparatus 202 may be deployed on land, including an indoor or outdoor apparatus, a handheld apparatus, or a vehicle-mounted apparatus, may be deployed on the water (for example, on a ship), or may be deployed in the air (for example, on an airplane, a balloon, or a satellite). For example, the receiving apparatus 202 in this embodiment of this application may be user equipment (user equipment, UE), a terminal (terminal), a mobile station (mobile station, MS), a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), and the like. The receiving apparatus 102 may alternatively be a communication chip that has a communication module and that can perform decompression, decoding, and formatted bitstream reverse conversion on audio data.

It should be understood that the sending apparatus 201 and the receiving apparatus 202 may be wirelessly connected.

With development of society, more machines in modern life develop toward automation and intelligentization, and vehicles used for mobile traveling are no exception. Intelligent vehicles are gradually entering daily life of people. In recent years, an ADAS plays an important role in the intelligent vehicle. For the ADAS, in a traveling process of the vehicle, various sensors installed on the vehicle are used to sense a surrounding environment at any time, collect data, identify, detect, and track static and moving objects, and perform systematic operation and analysis with reference to map data of a navigator, so that a driver can be aware of a possible danger in advance, to effectively improve driving comfort and safety of the vehicle. In short, real self-driving is a product of ultimate development of the ADAS. In a self-driving architecture, a sensing layer is compared to an "eye" of a vehicle, and includes vision sensors such as a vehicle-mounted camera, and radar sensors such as a vehicle-mounted millimeter-wave radar, a vehicle-mounted lidar, and a vehicle-mounted ultrasonic radar. The millimeter-wave radar is the first to become a main sensor in a self-driving system due to low costs and a mature technology. Currently, more than ten functions have been developed for the ADAS, and adaptive cruise control, automatic emergency braking, lane change assistance, blind spot monitoring, and the like are inseparable from the vehicle-mounted millimeter-wave radar.

With an increase of a penetration rate of vehicle-mounted radars, mutual interference between automotive radars becomes increasingly serious. This greatly reduces a detection probability of a radar or increases a false alarm probability of a radar, posing non-negligible impact to safety or comfort. How to reduce interference between vehicle-mounted radars is a problem that needs to be resolved. If the detection probability of the radar decreases or the false alarm probability of the radar increases, this poses non-negligible impact to driving safety or comfort. Therefore, how to reduce interference between the vehicle-mounted radars is a problem that needs to be resolved.

In a possible solution, a radar random frequency hopping technology may be used, that is, different waveform frequencies may be provided for different radars to prevent interference between a plurality of radars. Although the radar random frequency hopping technology can reduce probability of mutual interference when radar density is not high, due to limited spectrum resources, more vehicles having assisted driving functions, and an increasing penetration rate of radars, when surrounding radar density is high, a probability that a plurality of radars can select frequency resources that do not interfere with each other through random frequency hopping is low, and interference cannot be avoided.

In another possible solution, a cooperative radar may be used to exchange information between radars, to exchange resource information between the radars, so that the radar can take a subsequent corresponding interference avoidance measure based on obtained time-frequency resource usage information of another radar. In the collaborative radar, a measure of information exchange between radars depends on a communication device other than the radar, for example, vehicle to everything (vehicle to everything, V2X). This type of technology requires installation of an additional communication device, which increases costs. In addition, information exchange between different devices needs to be established to complete interference avoidance of the collaborative radar, which increases a delay.

In order to reduce costs, radar information may be transmitted by using a phase modulation continuous wave (phase modulation continuous wave, PMCW) radar or an orthogonal frequency division multiplexing (orthogonal frequency division multiplexing, OFDM) radar. However, technologies of the PMCW radar and the OFDM radar are immature, and costs are high.

In view of this, an embodiment of this application provides a radar information transmission method. In the method, a second device may include information about the second device in a radar signal for sending. A first device may receive the radar signal, and obtain the information about the second device by parsing the radar signal, so that information transmission between the devices can be implemented without a need to install an additional communication device or use a complex waveform design. In this way, resource usage can be coordinated between the devices, and mutual interference can be reduced.

FIG. 3 is a diagram of a possible application scenario according to an embodiment of this application. The foregoing application scenario may be self-driving, autonomous driving, intelligent driving, connected driving, or the like. A radar detection apparatus may be installed on a motor vehicle (for example, an uncrewed vehicle, a smart vehicle, an electric vehicle, or a digital vehicle), an uncrewed aerial vehicle, a track vehicle, a bicycle, a signal light, a velocity measurement apparatus, a network device (for example, a base station or a terminal device in various systems), or the like. In addition, in addition to the radar detection apparatus, a processing apparatus and an apparatus may be installed on these apparatuses. This embodiment of this application is applicable not only to a radar detection apparatus between vehicles, but also to a radar detection apparatus between the vehicle and another apparatus, for example, the uncrewed aerial vehicle, or a radar detection apparatus between other apparatuses. In addition, the radar detection apparatus, the processing apparatus, and the apparatus may be installed on a mobile device, for example, the radar detection apparatus is installed on a vehicle as a vehicle-mounted radar detection apparatus. Alternatively, the radar detection apparatus, the processing apparatus, and the apparatus may be installed on a fixed device, for example, installed on a device such as a road side unit (road side unit, RSU). Installing locations and functions of the radar detection apparatus, the processing apparatus, and the apparatus are not limited in embodiments of this application.

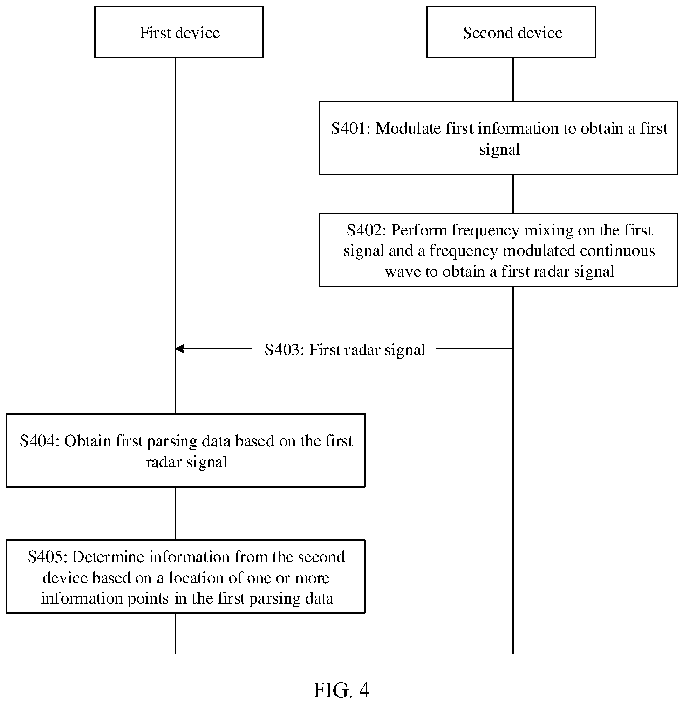

FIG. 4 is an example flowchart of a radar information transmission method according to an embodiment of this application. In the following description process, an example in which the method is applied to a network architecture shown in FIG. 3 is used. The method provided in the embodiment shown in FIG. 4 may be performed by a first device and a second device. The first device is, for example, a radar (or referred to as a radar apparatus), or the first device may be a chip installed in a communication device. The communication device is, for example, a radar (or a radar apparatus), or another device. The second device is, for example, a radar (or referred to as a radar apparatus), or the first device may be a chip installed in a communication device. The communication device is, for example, a radar (or a radar apparatus), or another device.

S401: The second device modulates first information to obtain a first signal.

For example, the first information may include one or more of the following:

### 1. Start frequency of the second device.

In an example, the start frequency of the second device may be a start frequency of an operating frequency band of the second device. For example, when the operating frequency band of the second device is 30 kHz to 300 kHz, the start frequency of the second device may be 30 kHz. For another example, when the operating frequency band of the second device is 30 GHz to 300 GHz, the start frequency of the second device may be 30 GHz.

### 2. Bandwidth of the second device.

In an example, the bandwidth of the second device may be understood as a frequency bandwidth, for example, 200 MHz or 1 GHz.

### 3. Time-frequency resource information of the second device.

In an example, when a time-frequency resource is allocated to the second device, the time-frequency resource information of the second device may include a time-frequency resource number. For example, a plurality of frequency domain ranges are predefined in a protocol, each frequency domain range is used to send a radar signal, and each frequency domain range may correspond to one frequency domain resource number. In this case, the time-frequency resource information of the second device may include a frequency domain resource number of a frequency domain range allocated to the second device. The frequency domain range may also be referred to as a frequency domain unit, a frequency band, a frequency range, or the like, and a specific name is not limited.

For another example, a plurality of time domain ranges are predefined in a protocol, each time domain range may be a period of consecutive duration, the period of consecutive duration may be used to send one or more radar signals, and each time domain range may correspond to one time domain resource number. In this case, the time-frequency resource information of the second device may include a time domain resource number of a time domain range allocated to the second device. The time domain range may also be referred to as a time domain unit, a time unit, duration, or the like, and a specific name is not limited.

### 4. Start time at which the second device sends a radar signal.

In an example, the start time at which the second device sends the radar signal may be start time of a time domain resource allocated to the second device. For example, if the time domain resource allocated to the second device includes time A to time B, the start time at which the second device sends the radar signal may be the time A.

### 5. Period in which the second device sends a radar signal.

In an example, the period in which the second device sends the radar signal may also be referred to as a sending period of the second device. The second device may send one or more radar signals every sending period.

### 6. Target information.

In an example, the target information may be information detected by the second device. For example, the target information may include information about a target object. The second device may transmit a radar signal and receive an echo signal to detect the information about the target object, for example, a distance between the target object and the second device and a velocity of the target object. The second device may modulate the detected information about the target object, and modulated information is included in the first signal.

In another example, the target information may be determined by the second device by obtaining first parsing data based on a radar signal from a target device and determining a location, in the first parsing data, of one or more information points corresponding to the radar signal from the target device.

### 7. Vehicle traveling intention.

For example, the vehicle traveling intention may include information such as a left turn, a right turn, a lane change, a U turn, overtaking, a fault, or an emergency.

In the foregoing descriptions, for modulation performed by the second device on the first information, refer to a modulation procedure of an OFDM signal. It may be understood that a modulation scheme in which the second device modulates the first information may be 64 quadrature amplitude modulation (quadrature amplitude modulation, QAM), 32 QAM, or the like, or may be another modulation scheme such as a binary on-off keying (on-off keying, OOK) modulation scheme. The modulation scheme is not limited in embodiments of this application.

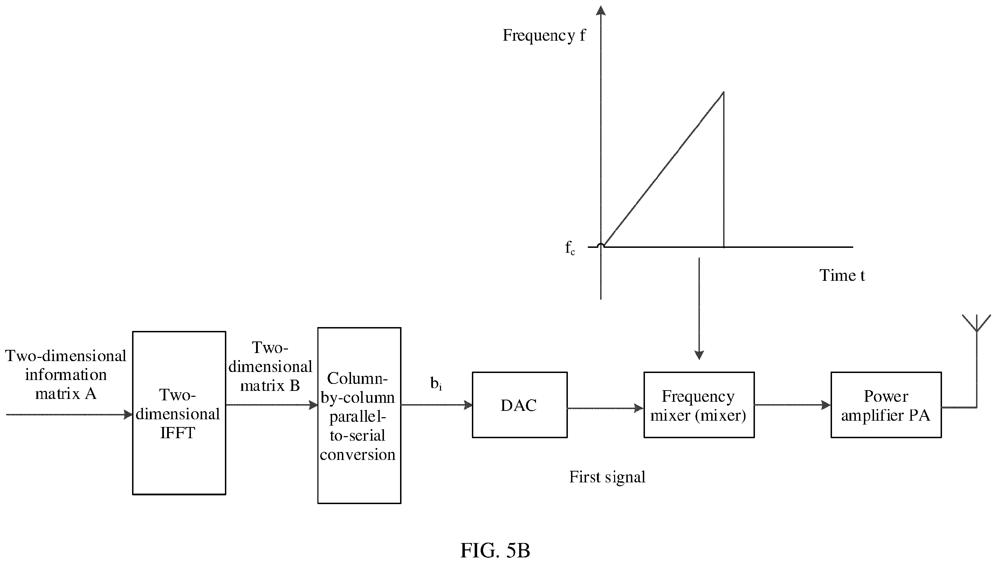

The following describes a possible modulation scheme in embodiments of this application with reference to the accompanying drawings. Refer to FIG. 5B. For example, information is transmitted based on a range-Doppler map (range-Doppler map, RD map). An effect that needs to be achieved through modulation is to modulate an information bit on the RD map onto a carrier.

In FIG. 5B, the second device may construct a two-dimensional information matrix A based on an information element (for example, the first information), and the two-dimensional information matrix A may be an implementation of an information symbol. Coordinates such as (distance, Doppler) or (distance, velocity) of the information bit on the RD map correspond to a frequency and a phase of a modulation symbol. Therefore, the two-dimensional information matrix A may be a matrix that has a same dimension as the RD map, for example, an M*N-dimensional matrix. M may be an integer greater than or equal to 1, N may be an integer greater than or equal to 1, and M and N may be the same or different.

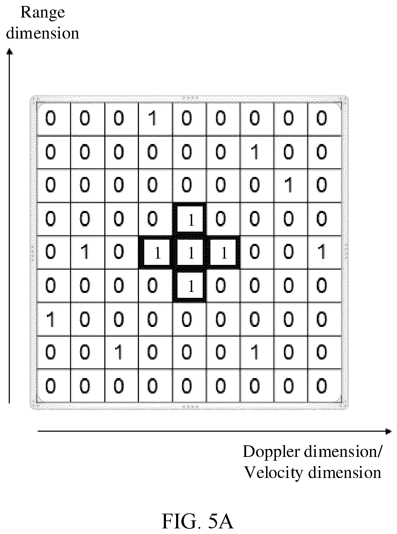

FIG. 5A shows a possible two-dimensional information matrix A. In the two-dimensional information matrix A, a row of the matrix indicates a horizontal coordinate of the RD map, for example, a Doppler dimension or a velocity dimension, and a column of the matrix indicates a vertical coordinate of the RD map, for example, a range dimension. In the matrix, "0" indicates that there is no information bit, "1" indicates that there is an information bit, and the information bit corresponds to a frequency and a phase of a modulation symbol.

Optionally, in FIG. 5A, an information bit of a shadow part in the two-dimensional information matrix A may be a preset flag bit.

As shown in FIG. 5B, the second device may perform inverse fast Fourier transform (inverse fast Fourier transform, IFFT) on the two-dimensional information matrix A to obtain a two-dimensional matrix **B.** The second device may sequentially output the two-dimensional matrix B by column, for example, output the two-dimensional matrix B from left to right or from right to left. In this specification, descriptions are provided in an example in which the two-dimensional matrix B is output from left to right, and outputs of the two-dimensional matrix B are separately denoted as ***b***₀, ***b***₁, ... , ***and b***_{*N-*1}. It may be understood that *bᵢ*(*i* = 0,1,2, ... , *N -* 1) is a column vector, namely, a column of the two-dimensional matrix B. The second device may perform parallel-to-serial conversion on ***b**ᵢ*, and then input a converted column vector to a digital-to-analog converter (digital-to-analog converter, DAC), to obtain, through sampling, a time domain baseband signal *s_{baseᵢ}*(*t*) of an i^{th} period, namely, the first signal.

S402: The second device performs frequency mixing on the first signal and a frequency modulated continuous wave to obtain a first radar signal.

For example, information is transmitted based on the RD map. Refer to FIG. 5B. The second device may perform frequency mixing on the first signal *s_{baseᵢ}*(*t*) and a carrier FMCW signal *S_{tx_fmcw}*(*t*) to obtain a time domain radio frequency signal *s_{rfᵢ}*(*t*) of the i^{th} period. The second device may traverse i to obtain first signals of N periods based on each column vector of the two-dimensional matrix B, and perform S402 to obtain time domain radio frequency signals of the N periods, namely, first radar signals.

Optionally, as shown in FIG. 5B, the second device may input the first radar signal to a power amplifier (power amplifier, PA) for power amplification, and then transmit a power-amplified first radar signal *Sₜₓ*(t) through an antenna.

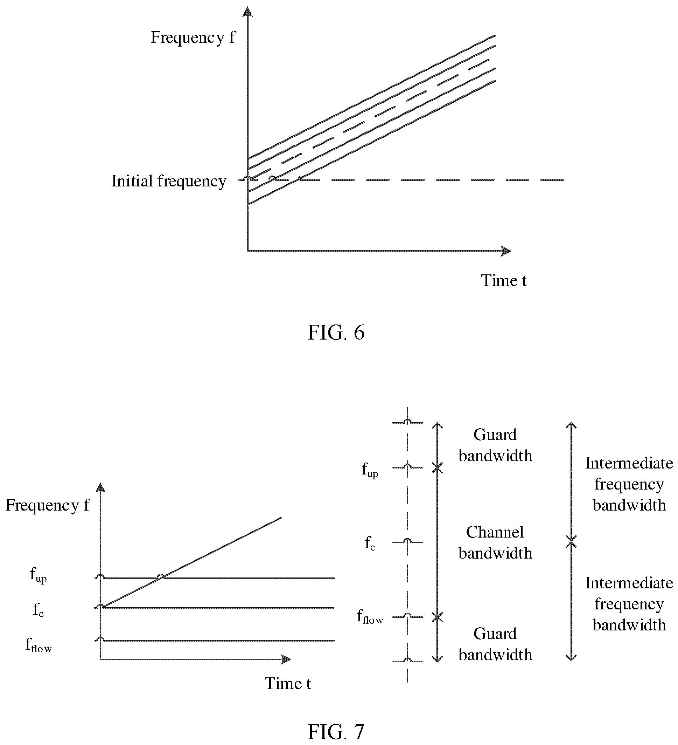

FIG. 6 shows an example of a waveform of the first radar signal *Sₜₓ*(t)*.* It can be seen that the second device may perform S401 and S402 to generate a multi-carrier FMCW waveform. FIG. 6 shows only an example of a waveform of one period. The second device may generate a plurality of consecutive multi-carrier FMCW periodic signals. A quantity of periods is a quantity of coherent periods configured by an FMCW radar, for example, 128 or 256.

S403: The second device sends the first radar signal.

After being spatially propagated, the first radar signal may be received by the first device. For example, the first device may receive a plurality of first radar signals. For example, the first device may receive a first radar signal from at least one device.

In a possible case, the first device may scan and receive the first radar signal at specified time. It may be understood that the specified time may be negotiated between the second device and the first device, or may be indicated by the second device, or may be predefined or preconfigured in a protocol.

Optionally, the first radar signal may carry destination information, for example, information about the first device. When the first device receives the first radar signal, because the first radar signal carries the information about the first device, the first device may determine that the first radar signal is sent to the first device. When another device receives the first radar signal, because the first radar signal carries the information about the first device, the another device may also determine that the first radar signal is not sent to the another device, and therefore the another device may discard the first radar signal.

In a possible implementation, due to factors such as a transmission delay, a timing error, and an intermediate frequency bandwidth limitation of a receiver, the second device may limit a frequency domain range of the first radar signal by using a guard bandwidth. A guard bandwidth range does not include the first radar signal, that is, a bandwidth occupied by the first radar signal does not include the guard bandwidth.

FIG. 7 is a diagram of the first radar signal. *f_{c}* is an initial frequency of a central waveform, *fᵤₚ* is an initial frequency of an upper-edge waveform, and *f_{low}* is an initial frequency of a lower-edge waveform. In other words, a bandwidth of the first radar signal is a bandwidth between *f_{low}* and *fᵤₚ,* and is referred to as a channel bandwidth in FIG. 7. It can be seen from FIG. 7 that, an intermediate frequency band is symmetric with respect to *f_{c}*, a bandwidth between *f_{c}* and *fᵤₚ* plus the guard bandwidth is equal to the intermediate frequency bandwidth, and similarly, a bandwidth between *f_{c}* and *f_{low}* plus the guard bandwidth is equal to the intermediate frequency bandwidth. The guard bandwidth is used to prevent a transmitted signal, for example, the first radar signal, from falling beyond the intermediate frequency bandwidth of the receiver due to a spatial propagation delay, and prevent the first radar signal from falling beyond the intermediate frequency bandwidth of the receiver due to a center frequency alignment error. An initial frequency of the first radar signal should be selected within a range of [*fᵤₚ*, *f_{low}*], that is, selected within a channel bandwidth.

It may be understood that, it can be seen from FIG. 7 that the channel bandwidth and the guard bandwidth do not overlap.

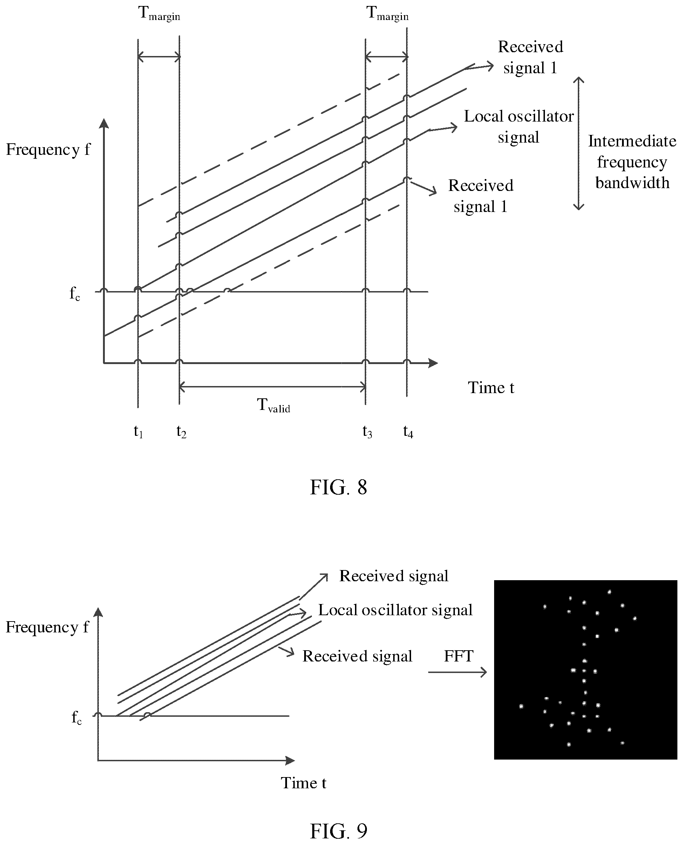

In another possible implementation, due to factors such as a transmission delay, a timing error, and an intermediate frequency bandwidth limitation of a receiver, the first device may limit an effective signal range of the first radar signal by using a time interval. Refer to FIG. 8. It is assumed that each period is divided into three areas. A second time interval between t₁ and t₄ may be considered as a time interval occupied by the first radar signal. Guard time margins T_{margin} based on a timing error and a propagation delay are located at two sides of the second time interval. A first time interval between t₂ and t₃ may be considered as a valid time interval of the first radar signal.

It can be seen from FIG. 8 that a time difference exists between a received signal and a local oscillator signal of the receiver due to the factors such as the transmission delay and the timing error. To prevent a case in which a bandwidth of the received signal (for example, a received signal 1 shown in FIG. 8) falls beyond an intermediate frequency bandwidth of the first device and frequency mixing of the received signal and the local oscillator signal is consequently affected, the first device may use a signal in the second time interval T_{valid} as a signal processing focus area, that is, the first device may perform frequency mixing on the received signal in the second time interval T_{valid} and the local oscillator signal in the second time interval T_{valid}. In this way, frequency mixing can be performed on the received signal and the local oscillator signal that are in the intermediate frequency bandwidth, to improve signal processing accuracy.

S404: The first device obtains the first parsing data based on the first radar signal.

For example, the first device may perform frequency mixing on the local oscillator signal of the receiver of the first device and the received signal, transmit a mixed signal to a low-pass filter, and then transmit the mixed signal to an ADC to obtain an intermediate frequency signal. The first device may obtain the first parsing data based on the intermediate frequency signal.

It may be understood that the first device may obtain the first parsing data based on a first radar signal from one device, or the first device may obtain the first parsing data based on first radar signals from a plurality of devices. This is not specifically limited in this application.

In a possible case, the first parsing data may include one-dimensional data such as range data, Doppler data, azimuth data, and pitch data. For example, the range data may be obtained by performing a fast Fourier transform (fast Fourier transform, FFT) on a fast-time intermediate frequency signal. The fast-time intermediate frequency signal is obtained by performing fast-time sampling on a mixed signal that is obtained by performing frequency mixing on the first radar signal and the local oscillator signal of the first device.

For another example, the Doppler data is obtained by performing an FFT on a slow-time intermediate frequency signal. The slow-time intermediate frequency signal is obtained by performing slow-time sampling on a mixed signal that is obtained by performing frequency mixing on the first radar signal and the local oscillator signal of the first device.

For another example, the azimuth data is obtained by performing an FFT on an azimuth-dimensional intermediate frequency signal. The azimuth-dimensional intermediate frequency signal is intermediate frequency signals on different antennas. The different antennas are different antennas in a horizontal direction.

For another example, the pitch data is obtained by performing an FFT on a pitch-dimensional intermediate frequency signal. The pitch-dimensional intermediate frequency signal is intermediate frequency signals on different antennas. Different from the azimuth-dimensional intermediate frequency signal, the pitch-dimensional intermediate frequency signal is intermediate frequency signals on different antennas in a vertical direction.

In another possible case, the first parsing data may include two-dimensional data such as range-Doppler data, range-azimuth data, range-pitch data, Doppler-azimuth data, Doppler-pitch data, and azimuth-pitch data. It may be understood that the two-dimensional data may be obtained by obtaining corresponding one-dimensional data. For example, the range-Doppler data may be obtained by performing an FFT on a fast-time intermediate frequency signal and performing an FFT on a slow-time intermediate frequency signal.

In another possible case, the first parsing data may include three-dimensional data such as range-Doppler-azimuth data, range-Doppler-pitch data, Doppler-azimuth-pitch data, and range-azimuth-pitch data. Similarly, the three-dimensional data may be obtained by obtaining corresponding one-dimensional data. For example, the range-Doppler-azimuth data may be obtained by performing an FFT on a fast-time intermediate frequency signal, performing an FFT on a slow-time intermediate frequency signal, and performing an FFT on an azimuth-dimensional intermediate frequency signal.

In still another possible case, the first parsing data may include four-dimensional data such as range-Doppler-azimuth-pitch data.

It may be understood that the parsing data such as the range data, the Doppler data, the azimuth data, and the pitch data may include parsing data in the conventional technology, or may include parsing data evolved in the conventional technology. Similarly, the four-dimensional data may be obtained by obtaining corresponding one-dimensional data.

In embodiments of this application, the first parsing data may indicate one or more information points. In the following descriptions, an example in which the first parsing data includes two-dimensional range-Doppler data such as an RD map is used for description. Refer to FIG. 9. The first device may perform an FFT on an intermediate frequency signal to obtain an RD map, where the RD map may indicate one or more information points. It may be understood that the one or more information points may include one or more information points corresponding to the second device.

In a possible case, the first device may obtain the one or more information points in the RD map by using a detection algorithm. For example, the first device may obtain the one or more information points in the RD map by using a constant false alarm rate (constant false alarm rate, CFAR) method or a constant threshold method. The one or more information points included in the RD map may be understood as the one or more information points indicated by the first parsing data.

In embodiments of this application, a manner in which the first device obtains the first parsing data is not specifically limited. The foregoing FFT is merely used as an example for description, and does not constitute a limitation on how the first device obtains the first parsing data.

S405: The first device determines information from the second device based on a location of the one or more information points in the first parsing data.

The first device may determine the information from the second device, namely, the first information, based on a location of the one or more information points in the RD map. For example, information points in different areas of the RD map may indicate different waveform parameter values, and the first information may be determined based on the waveform parameter values.

It may be understood that the first device and the second device need to have a unified understanding of a mapping relationship between the RD map and the first information. For example, the mapping relationship between the RD map and the first information may be specified in a standard or a protocol, or the mapping relationship between the RD map and the first information may be specified by laws and regulations, or the mapping relationship between the RD map and the first information is agreed on or defined in advance. A specific manner of specifying or defining the mapping relationship between the RD map and the first information is not limited in embodiments of this application. The mapping relationship between the RD map and the first information can be obtained according to provisions of the standard or protocol or provisions of the laws and regulations, or can be agreed on or defined in advance.

For example, it is assumed that the first device obtains the RD map based on first radar signals of a plurality of devices. For example, the first device may obtain the RD map based on a first radar signal of the second device and a first radar signal of a third device. In this case, the RD map may include one or more information points corresponding to the first radar signal from the second device, which may be referred to as a first information point, and include one or more information points corresponding to the first radar signal from the third device, which may be referred to as a second information point. The first information point is different from the second information point.

The first information point being different from the second information point may be understood as that a relative phase difference of the first radar signal from the second device is different from a relative phase difference of the first radar signal from the third device. A phase difference between two adjacent chirps may be referred to as a relative phase difference.

And/or a frequency difference between a received signal corresponding to the first radar signal from the second device and a local oscillator signal is different from a frequency difference between a received signal corresponding to the first radar signal from the third device and a local oscillator signal. It should be noted that the frequency difference between the received signal and the local oscillator signal may affect a horizontal coordinate of an information point corresponding to the first radar signal in the RD map. In other words, when the frequency difference between the received signal corresponding to the first radar signal from the second device and the local oscillator signal is different from the frequency difference between the received signal corresponding to the first radar signal from the third device and the local oscillator signal, a horizontal coordinate of the first information point in the RD map is different from a horizontal coordinate of the second information point in the RD map.

In a possible implementation, due to a timing error and a transmission delay, the first device may perform time-domain and frequency-domain synchronization correction on the one or more information points included in the RD map.

In a possible case, the first device and the second device may perform time synchronization. For example, the first device and the second device may perform time synchronization by using a global positioning system (global positioning system, GPS). Although the GPS provides timing for the first device and the second device, a timing error may exist. In addition, although the first device and the second device exchange information by using a same waveform such as an FMCW waveform to implement frequency domain synchronization, because respective local oscillator signals are still different, the first device may perform, based on a preset mark point, time-domain and frequency-domain correction on the one or more information points included in the RD map.

Optionally, a pattern of the mark point may be agreed on by the first device and the second device, or predefined in a standard or a protocol. For example, the pattern of the mark point may be a special form, for example, a "cross" pattern. Similarly, a location of the mark point in the RD map may also be agreed on by the first device and the second device, or predefined in a standard or a protocol. For example, the location of the mark point may be in a center of the RD map.

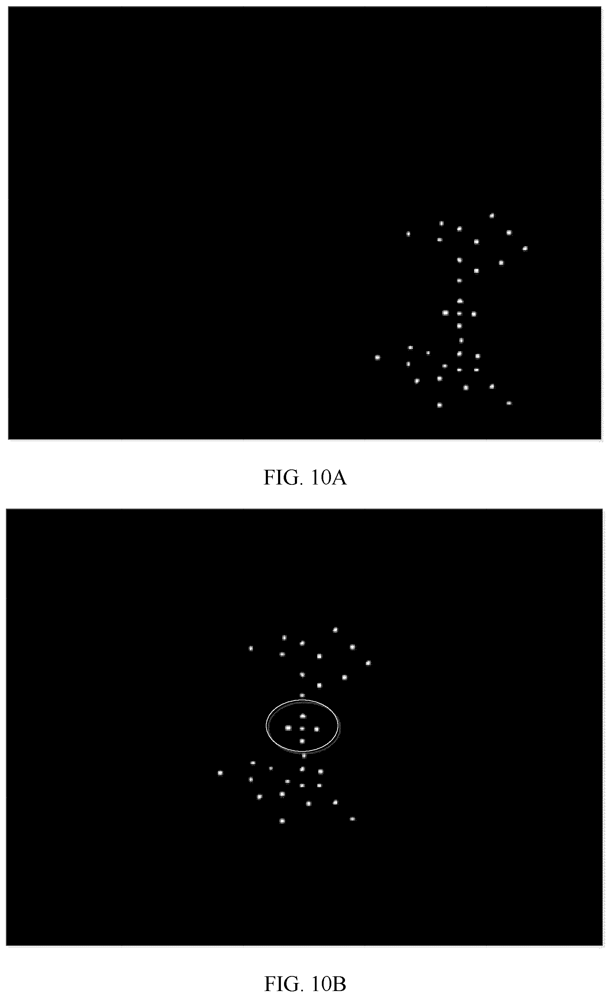

Refer to FIG. 10A. The first device detects one or more information points in the RD map, and the one or more information points may be located at a lower right corner of the RD map due to a timing error and a transmission delay. It is assumed that the pattern of the mark point is a "cross" pattern, and the location of the mark point is the center of the RD map. The first device may determine the mark point in the RD map, as shown in FIG. 10A. The first device may translate the mark point to the center of the RD map, and keep a relative location between information points unchanged in a translation process, as shown in FIG. 10B. In this way, time-domain correction and frequency-domain correction are completed.

According to the foregoing solution, the first device and the second device can use a radar signal to carry information, to implement information transmission between radars, and coordinate resource usage between the radars, thereby avoiding mutual interference. Compared with a related technology, in the foregoing technical solution, because no additional communication device needs to be installed, costs are low; in addition, because a complex waveform design does not need to be used, a processing velocity of a radar can be improved, to reduce a delay.

As mentioned above, the radar may transmit a signal and receive an echo signal to detect a target object. When there are a plurality of devices, the plurality of devices may simultaneously send radar signals. Therefore, in this embodiment of this application, the first device needs to distinguish whether the second device sends a radar signal carrying the first information or a radar signal for detecting a target. For ease of differentiation, in the following, the radar signal carrying the first information is referred to as a first radar signal, and the radar signal for detecting a target is referred to as a second radar signal.

The first device and the second device may send the first radar signal and the second radar signal according to a unified frame structure, and the following manner 1 and manner 2 may be included.

### Manner 1: Inter-frame isolation.

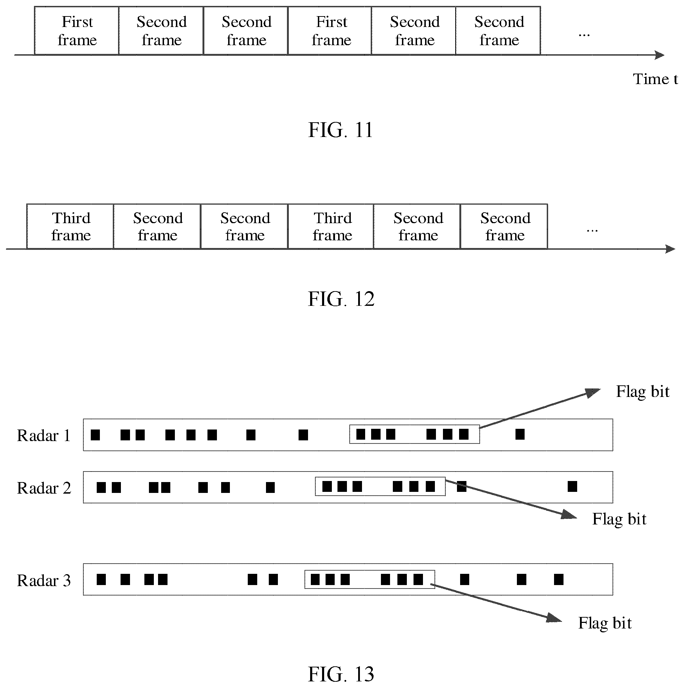

For example, the first radar signal is sent in a first frame, and the second radar signal is sent in a second frame. Refer to FIG. 11. The first frame may be used to send the first radar signal, and the second frame may be used to send the second radar signal. The first frame may include one or more first radar signals. For example, it is predefined in a standard or a protocol that each device may send the first radar signal within a time domain resource occupied by the first frame. Similarly, the second frame may include one or more second radar signals. For example, it is predefined in a standard or a protocol that each device may send the second radar signal within a time domain resource occupied by the second frame. In this way, each device can send the first radar signal within the time domain resource occupied by the first frame, and send the second radar signal within the time domain resource occupied by the second frame.

The first device may determine, based on the time domain resource occupied by the radar signal, whether the radar signal is the first radar signal or the second radar signal.

It can be seen from FIG. 11 that the time domain resources of the first frame and the second frame do not overlap.

### Method 2: Intra-frame isolation.

For example, the first radar signal and the second radar signal are sent in a same frame. A first time-frequency resource occupied by the first radar signal is orthogonal to a second time-frequency resource occupied by the second radar signal. Refer to FIG. 12. A third frame may be used to send the first radar signal and the second radar signal. It may be understood that the first time-frequency resource may be predefined, the second time-frequency resource may be predefined, and the first device and the second device may have a unified understanding of the first time-frequency resource and the second time-frequency resource.

Optionally, a second frame in FIG. 12 may be used to send the second radar signal. Because a primary task of the radar is to detect a target, a time-frequency resource occupied by the second frame used to send the second radar signal may be predefined. In the third frame, each radar device may send the first radar signal within the first time-frequency resource, and send the second radar signal within the second time-frequency resource. In the second frame, each device may send the second radar signal.

It may be understood that the time domain resources occupied by the first frame, the second frame, and the third frame in FIG. 11 and FIG. 12 are merely shown as examples.

According to the foregoing solution, the first device may distinguish between the first radar signal and the second radar signal through intra-frame isolation and inter-frame isolation.

In a possible case, when a plurality of devices simultaneously transmit first radar signals, to enable the first device to distinguish information carried in the first radar signals, different devices may implement multiple access by using the following method 1 and method 2.

### Method 1: Random range division multiple access.

Different devices respectively occupy different range-dimensional resources as communication resources of the devices. Refer to FIG. 13. A range-dimensional resource occupied by a radar 1, a range-dimensional resource occupied by a radar 2, and a range-dimensional resource occupied by a radar 3 are different. It should be noted that a factor affecting a range dimension may be a frequency difference between a received signal of the first radar signal and a local oscillator signal. Therefore, first radar signals of different devices occupy different frequency ranges, so that the different devices can occupy different range-dimensional resources.

Optionally, there may also be a flag bit in FIG. 13. In this case, when translating a flag bit, the first device only needs to perform translation in a Doppler dimension.

### Method 2: Random Doppler division multiple access.

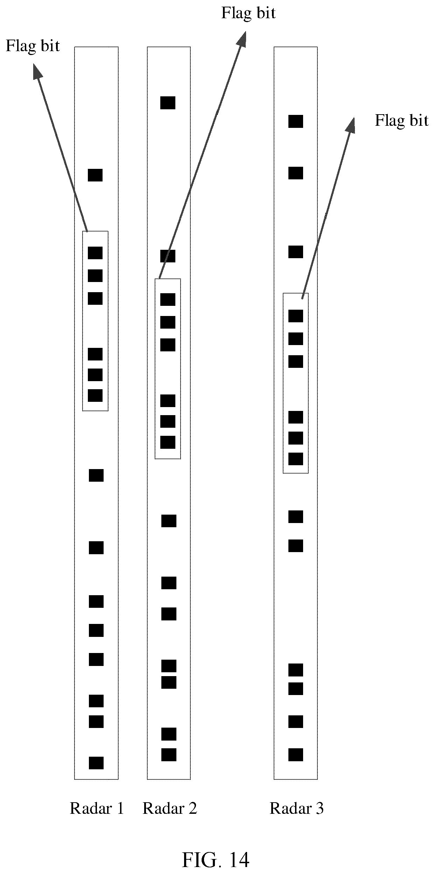

Different devices respectively occupy different Doppler-dimensional resources as communication resources of the devices. Refer to FIG. 14. A Doppler-dimensional resource occupied by a radar 1, a Doppler-dimensional resource occupied by a radar 2, and a Doppler-dimensional resource occupied by a radar 3 are different. It should be noted that a factor affecting a Doppler dimension may be a relative phase difference between first radar signals. It can be seen from FIG. 1 that the first radar signal may be periodic, and a phase difference between first radar signals in two consecutive periods may be referred to as a relative phase difference. Therefore, first radar signals of different devices have different relative phase differences, so that the different devices can occupy different Doppler-dimensional resources.

Optionally, there may also be a flag bit in FIG. 14. In this case, when translating a flag bit, the first device only needs to perform translation in a multi-range dimension.

In the foregoing descriptions, the first device and the second device each may be a device with a single transmit antenna. Therefore, the first parsing data may include the RD map. When the second device has a plurality of transmit antennas, for example, when the second device has two transmit antennas, the first parsing data may include the range-Doppler-azimuth data, for example, radar cube (radar cube). Compared with the RD map, the radar cube has an angle dimension, increasing a degree of freedom. In other words, a single radar can carry more information, and for a multiple access problem, more radars can simultaneously send information.

In the foregoing example, the information is carried by using a location of the one or more information points included in the RD map. In a possible case, the information may alternatively be carried by using a phase of one or more information points. For example, the first device may determine a phase of the one or more information points included in the RD map, to determine the first information. Similarly, the first device and the second device may have a unified understanding of a mapping relationship between the phase and the first information. Details are not described herein again.

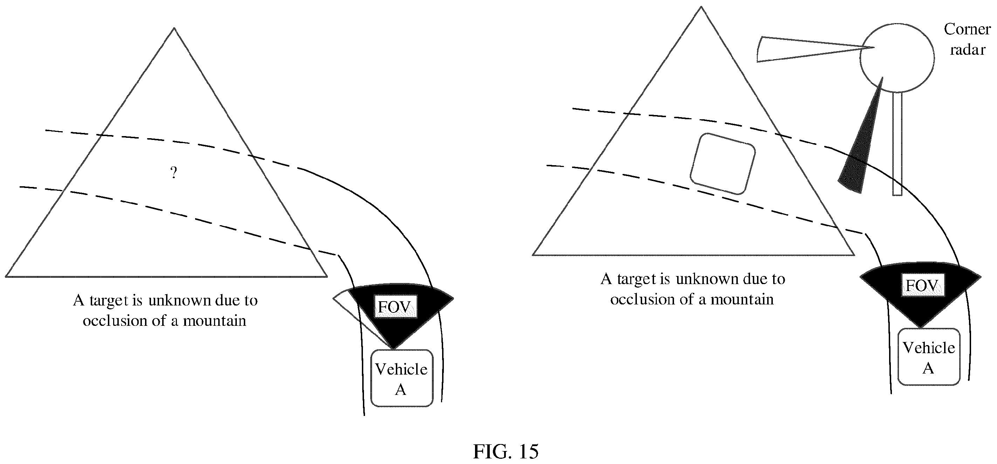

The following describes, with reference to FIG. 15, the technical solutions provided in embodiments of this application. FIG. 15 is a diagram of a scenario of a radar information transmission method according to an embodiment of this application. In a left part of In FIG. 15, a vehicle A may detect, by using a radar, whether a target object exists ahead of a mountain road turn. However, due to occlusion of a mountain, the vehicle A cannot sense, by using the radar, whether another vehicle is traveling behind the mountain. In other words, a detection field of view (field of view, FOV) of the vehicle A (a white part of a radar FOV of the vehicle A in FIG. 15) is missing.

In a right part of the figure, a radar is installed at the mountain road turn and may be referred to as a corner radar. The corner radar may have a capability of transmitting radar information. For example, the corner radar may send a second radar signal and receive an echo signal to determine whether a target object, such as a target vehicle, exists behind the mountain. The corner radar may further determine information such as a velocity of the target vehicle from the corner radar and a velocity of the target vehicle based on the echo signal. The corner radar may include information about the target vehicle in a first radar signal in a manner shown in the embodiment shown in FIG. 4 for transmission. The vehicle A may receive the first radar signal, and determine, in the manner shown in the embodiment shown in FIG. 4, the information about the target vehicle carried in the first radar signal. For example, the vehicle A may obtain first parsing data based on the first radar signal. The vehicle A may determine the information about the target vehicle based on a location of one or more information points included in the first parsing data. In this way, the vehicle A may determine existence of the target vehicle occluded by the mountain.

According to the foregoing solution, the vehicle A can use the information about the target vehicle as a supplement to the FOV, and use the information about the target vehicle and the detected information as a detection result in a complete FOV, to achieve an over-the-horizon detection effect. In the scenario shown in FIG. 15, only an occluded mountain road is provided as an example. In another non-line-of-sight scenario, for example, an urban road, a turn occluded by a building, and a target that is on a slope or below a slope and that cannot be seen due to an angle, the technical solution shown in the embodiment shown in FIG. 4 may be applied to achieve an over-the-horizon target detection effect.

It should be noted that a current vehicle-mounted millimeter wave radar filters out a static target. In this case, when a vehicle breaks down or has an accident and stops on a lane, a vehicle-mounted millimeter-wave radar may miss detection of the target that stops on the lane, which may cause a serious safety accident. According to the foregoing solution applied to this embodiment of this application, the vehicle-mounted millimeter-wave radar may include related information in the first radar signal for sending. In this way, a vehicle that receives the first radar signal may determine that a vehicle stops on the lane, to perform an operation such as avoidance and deceleration.

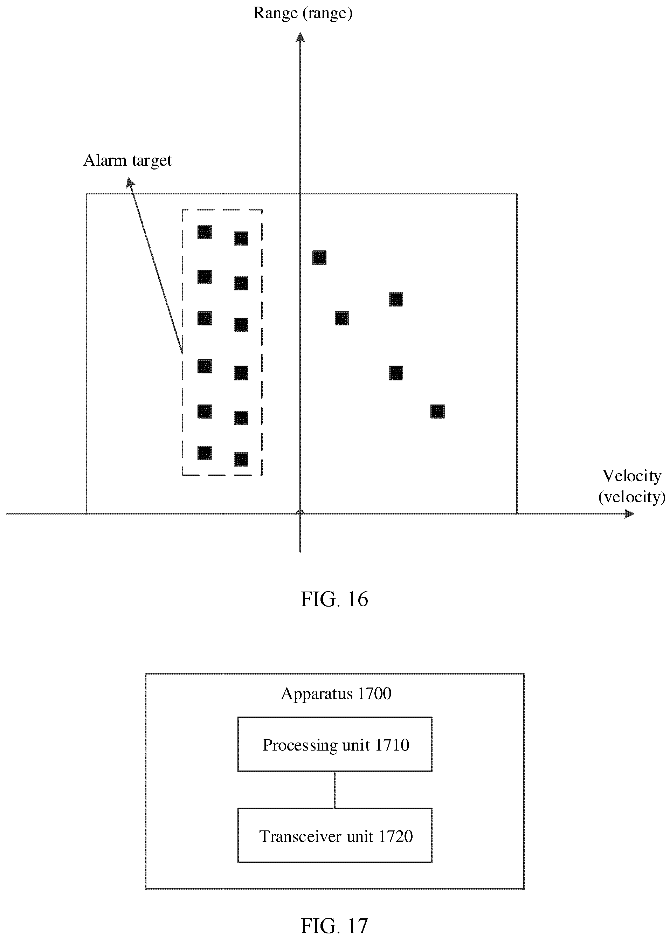

In an embodiment shown in FIG. 16, it is assumed that a vehicle breaks down and stops on a lane. Because the vehicle stops on the lane, a vehicle-mounted radar may be triggered to include an alarm target in the first radar signal for transmission. The alarm target may indicate the vehicle that stops on the lane.

For example, the vehicle-mounted radar may obtain, through listening, a time-frequency resource used by another vehicle-mounted radar. For example, the vehicle-mounted radar may determine, by using a listening function, a time-frequency resource used by the another vehicle-mounted radar to send a radar signal. The vehicle-mounted radar may modulate the alarm target to the first radar signal for transmission. For a manner in which the vehicle-mounted radar modulates the alarm target to the first radar signal, refer to the foregoing manner in which the second device modulates the first information to the first radar signal. Details are not described herein.

Optionally, different from a radar signal from a static target, when modulating the alarm target to the first radar signal, the vehicle-mounted radar may modulate the first radar signal into a multi-carrier radar signal. The multi-carrier radar signal may have one or more types of Doppler information. In addition, due to a timing error and a frequency error, the vehicle-mounted radar may simultaneously transmit signals in a plurality of range dimensions. In other words, the multi-carrier radar signal occupies a plurality of range-dimensional resources, to ensure that a receiving radar can discover a target with a velocity at a short distance during target detection.

The receive-end radar may receive the first radar signal when performing target detection. The receive-end radar may generate an RD map shown in FIG. 16 based on the first radar signal and an echo signal used during target detection. Because the first radar signal indicates the alarm target, and the echo signal is also used for target detection, information points corresponding to the echo signal and the first radar signal on the RD map are not distinguished. Therefore, the receive-end radar may not need to parse information, that is, the receive-end radar may not perform S405, but uses an information point corresponding to the first radar signal as a target for processing.

In a possible case, to enable radars of different types to receive alarm targets, the vehicle-mounted radar may transmit multi-carrier radar signals of a plurality of slopes, so that radars of different slopes can receive corresponding information. In another possible case, when it is predefined in a protocol or negotiated between radars that the alarm target is received and sent on a specific time-frequency resource, the vehicle-mounted radar may receive and send the alarm target by using a waveform. The waveform may be predefined in a protocol or negotiated.

With reference to the accompanying drawings, the following describes apparatuses configured to implement the foregoing methods in embodiments of this application. Therefore, all the foregoing content may be used in the following embodiments. Repeated content is not described again.

FIG. 17 is a block diagram of an apparatus 1700 according to an embodiment of this application. The apparatus 1700 may correspondingly implement functions or steps implemented by the first device or the second device in the foregoing method embodiments. The apparatus may include a processing unit 1710 and a transceiver unit 1720. Optionally, the apparatus may further include a storage unit. The storage unit may be configured to store instructions (code or a program) and/or data. The processing unit 1710 and the transceiver unit 1720 may be coupled to the storage unit. For example, the processing unit 1710 may read the instructions (the code or the program) and/or the data in the storage unit, to implement a corresponding method. The foregoing units may be disposed independently, or may be partially or completely integrated.

In some possible implementations, the apparatus 1700 can correspondingly implement the behavior and functions of the first device in the foregoing method embodiments. For example, the apparatus 1700 may be the first device, or may be a component (for example, a chip or a circuit) used in the first device. The transceiver unit 1720 may be configured to perform all receiving or sending operations performed by the first device in the embodiment shown in FIG. 4, for example, S403 in the embodiment shown in FIG. 4, and/or another process used to support the technology described in this specification. The processing unit 1710 is configured to perform all operations performed by the first device in the embodiment shown in FIG. 4 except receiving and sending operations, for example, S404 and S405 in the embodiment shown in FIG. 4, and/or another process used to support the technology described in this specification.

For example, the transceiver unit 1720 is configured to receive a first radar signal. The first radar signal carries information from at least one device. The processing unit 1710 is configured to obtain first parsing data based on the first radar signal. The first parsing data indicates one or more information points, and the one or more information points correspond to a second device in the at least one device. The processing unit 1710 is further configured to determine information from the second device based on a location of the one or more information points in the first parsing data.

In a possible implementation, the processing unit 1710 is further configured to perform, based on a preset mark point in the information point indicated by the first parsing data, time-domain and frequency-domain synchronization correction on the indicated information point. Optionally, a pattern of the mark point may be agreed on by the first device and the second device, or predefined in a standard or a protocol. For example, the pattern of the mark point may be a special form, for example, a "cross" pattern. Similarly, a location of the mark point in the first parsing data may also be agreed on by the first device and the second device, or predefined in a standard or a protocol. For example, the location of the mark point may be in a center of the first parsing data.

In a possible implementation, the transceiver unit 1720 is further configured to receive a second radar signal. The second radar signal is used to detect a target. The first radar signal and the second radar signal occupy different frames. For example, a first frame may be used to send the first radar signal, and a second frame may be used to send the second radar signal. The first frame may include one or more first radar signals. For example, it is predefined in a standard or a protocol that each device may send the first radar signal within a time domain resource occupied by the first frame. Similarly, the second frame may include one or more second radar signals. For example, it is predefined in a standard or a protocol that each device may send the second radar signal within a time domain resource occupied by the second frame.

In a possible implementation, the transceiver unit 1720 is further configured to receive a second radar signal. The second radar signal is used to detect a target. The first radar signal and the second radar signal occupy a same frame, and a time-frequency resource of the first radar signal is orthogonal to a time-frequency resource of the second radar signal. For example, a third frame may be used to send the first radar signal and the second radar signal. A first time-frequency resource occupied by the first radar signal is orthogonal to a second time-frequency resource occupied by the second radar signal.

In a possible implementation, the processing unit 1710 is further configured to obtain the first radar signal in a second time interval, where the second time interval is in a first time interval. The processing unit 1710 is specifically configured to obtain the first parsing data of the first radar signal in the second time interval.

In some possible implementations, the apparatus 1700 can correspondingly implement the behavior and functions of the second device in the foregoing method embodiments. For example, the apparatus 1700 may be the second device, or may be a component (for example, a chip or a circuit) used in the second device. The transceiver unit 1720 may be configured to perform all receiving or sending operations performed by the second device in the embodiment shown in FIG. 4, for example, S403 in the embodiment shown in FIG. 4, and/or another process used to support the technology described in this specification. The processing unit 1710 is configured to perform all operations performed by the second device in the embodiment shown in FIG. 4 except receiving and sending operations, for example, S12001 and S402 in the embodiment shown in FIG. 4, and/or another process used to support the technology described in this specification.

For example, the processing unit 1710 is configured to modulate first information to obtain a first signal. The processing unit 1710 is further configured to perform frequency mixing on the first signal and a frequency modulated continuous wave to obtain a first radar signal. The transceiver unit 1720 is configured to send the first radar signal to a first device.

In a possible implementation, the processing unit 1710 is further configured to generate an information symbol based on the first information. The processing unit 1710 is further configured to obtain a time domain information symbol through inverse fast Fourier transform based on the information symbol. The processing unit 1710 is further configured to perform digital-to-analog conversion on the time domain information symbol to obtain the first signal.

In a possible implementation, the transceiver unit 1720 is further configured to send a second radar signal. The second radar signal is used to detect a target. The first radar signal and the second radar signal occupy different frames. For example, a first frame may be used to send the first radar signal, and a second frame may be used to send the second radar signal. The first frame may include one or more first radar signals. For example, it is predefined in a standard or a protocol that each device may send the first radar signal within a time domain resource occupied by the first frame. Similarly, the second frame may include one or more second radar signals. For example, it is predefined in a standard or a protocol that each device may send the second radar signal within a time domain resource occupied by the second frame. In this way, each device can send the first radar signal within the time domain resource occupied by the first frame, and send the second radar signal within the time domain resource occupied by the second frame.

In a possible implementation, the transceiver unit 1720 is further configured to send a second radar signal. The second radar signal is used to detect a target. The first radar signal and the second radar signal occupy a same frame, and a time-frequency resource of the first radar signal is orthogonal to a time-frequency resource of the second radar signal. For example, a third frame may be used to send the first radar signal and the second radar signal. A first time-frequency resource occupied by the first radar signal is orthogonal to a second time-frequency resource occupied by the second radar signal.

For operations performed by the processing unit 1710 and the transceiver unit 1720, refer to related descriptions in the foregoing method embodiments.

It should be understood that the processing unit 1710 in this embodiment of this application may be implemented by a processor or a processor-related circuit component, and the transceiver unit 1720 may be implemented by a transceiver, a transceiver-related circuit component, or a communication interface.

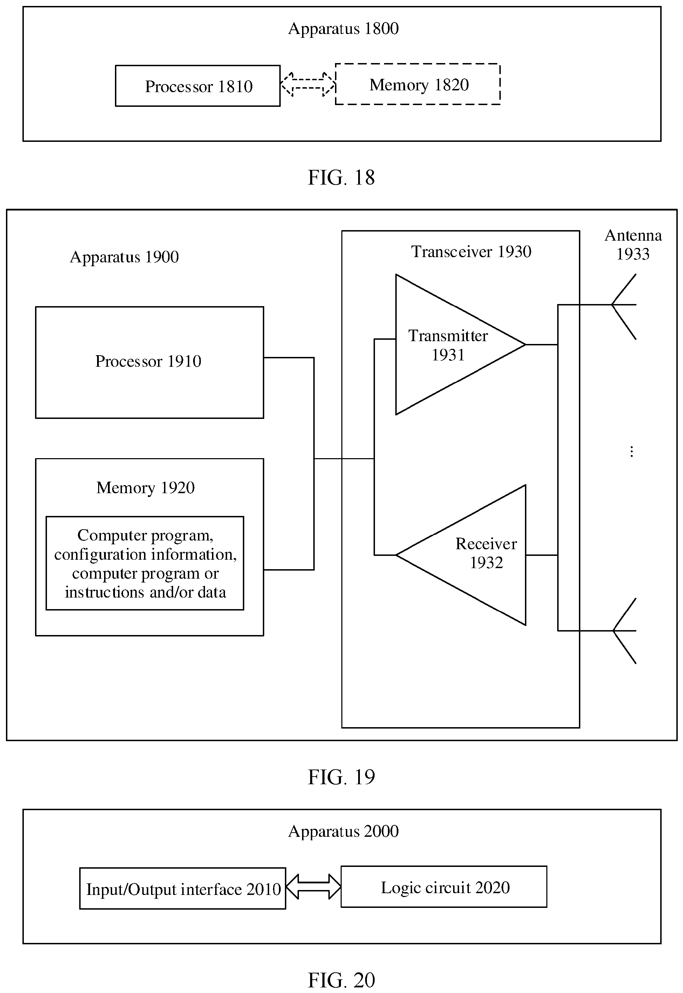

Based on a same concept, as shown in FIG. 18, an embodiment of this application provides an apparatus 1800. The apparatus 1800 includes a processor 1810. Optionally, the apparatus 1800 may further include a memory 1820, configured to store instructions executed by the processor 1810, store input data needed by the processor 1810 to run the instructions, or store data generated after the processor 1810 runs the instructions. The processor 1810 may implement the methods shown in the foregoing method embodiments by using the instructions stored in the memory 1820.

Based on a same concept, as shown in FIG. 19, an embodiment of this application provides an apparatus 1900. The apparatus 1900 may be a chip or a chip system. Optionally, in this embodiment of this application, the chip system may include a chip, or may include a chip and another discrete device.

The apparatus 1900 may include at least one processor 1910. The processor 1910 is coupled to a memory. Optionally, the memory may be located inside the apparatus, or may be located outside the apparatus. For example, the apparatus 1900 may further include at least one memory 1920. The memory 1920 stores a computer program, configuration information, a computer program or instructions, and/or data necessary for implementing any one of the foregoing embodiments. The processor 1910 may execute the computer program stored in the memory 1920, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 1910 may cooperate with the memory 1920. A specific medium for connection among a transceiver 1930, the processor 1910, and the memory 1920 is not limited in embodiments of this application.

The apparatus 1900 may further include the transceiver 1930, and the apparatus 1900 may exchange information with another device by using the transceiver 1930. The transceiver 1930 may be a circuit, a bus, a transceiver, or any other apparatus that may be configured to exchange information, or is referred to as a signal transceiver unit. As shown in FIG. 19, the transceiver 1930 includes a transmitter 1931, a receiver 1932, and an antenna 1933. In addition, when the apparatus 1900 is a chip type apparatus or a circuit, the transceiver in the apparatus 1900 may alternatively be an input/output circuit and/or a communication interface, and may input data (or is referred to as receiving data) and output data (or is referred to as sending data). The processor is an integrated processor, a microprocessor, or an integrated circuit, and the processor may determine output data based on input data.

In a possible implementation, the apparatus 1900 may be used in a first device. Specifically, the apparatus 1900 may be the first device, or may be an apparatus that can support the first device in implementing functions of the first device in any one of the foregoing embodiments. The memory 1920 stores a computer program, a computer program or instructions, and/or data necessary for implementing functions of the first device in any one of the foregoing embodiments. The processor 1910 may execute the computer program stored in the memory 1920, to complete the method performed by the first device in any one of the foregoing embodiments. When the apparatus is used in the first device, the receiver 1932 in the apparatus 1900 may be configured to receive a first radar signal through the antenna 1933.

In another possible implementation, the apparatus 1900 may be used in a second device. Specifically, the apparatus 1900 may be the second device, or may be an apparatus that can support the second device in implementing functions of the second device in any one of the foregoing embodiments. The memory 1920 stores a computer program, a computer program or instructions, and/or data necessary for implementing functions of the second device in any one of the foregoing embodiments. The processor 1910 may execute the computer program stored in the memory 1920, to complete the method performed by the second device in any one of the foregoing embodiments. When the apparatus is used in the second device, the transmitter 1931 in the apparatus 1900 may be configured to send a first radar signal through the antenna 1933.

The apparatus 1900 provided in this embodiment may be used in the first device to complete the method performed by the first device, or may be used in the second device to complete the method performed by the second device. Therefore, for technical effects that can be achieved by this embodiment, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Refer to FIG. 20. Based on the foregoing embodiments, an embodiment of this application further provides another apparatus 2000, including an input/output interface 2010 and a logic circuit 2020. The input/output interface 2010 is configured to: receive code instructions and transmit the code instructions to the logic circuit 2020. The logic circuit 2020 is configured to execute the code instructions to perform the method performed by the first device or the method performed by the second device in any one of the foregoing embodiments.

The following describes in detail an operation performed by the apparatus used in the first device or the second device.

In an optional implementation, the apparatus 2000 may be used in the first device, to perform the method performed by the first device. For example, the method may be specifically the method performed by the first device in the embodiment shown in FIG. 4.

For example, the input/output interface 2010 is configured to input a first radar signal. The first radar signal carries information from at least one device. The logic circuit 2020 is configured to obtain first parsing data based on the first radar signal. The first parsing data indicates one or more information points, and the one or more information points correspond to the second device in the at least one device. The logic circuit 2020 is further configured to determine information from the second device based on a location of the one or more information points in the first parsing data.

In another optional implementation, the apparatus 2000 may be used in the second device, to perform the method performed by the second device. For example, the method may be specifically the method performed by the second device in the embodiment shown in FIG. 4.

For example, the logic circuit 2020 is configured to modulate first information to obtain a first signal. The logic circuit 2020 is further configured to perform frequency mixing on the first signal and a frequency modulated continuous wave to obtain a first radar signal. The input/output interface 2010 is configured to output the first radar signal to the first device.

The apparatus 2000 provided in this embodiment may be used in the first device to complete the method performed by the first device, or may be used in the second device to complete the method performed by the second device. Therefore, for technical effects that can be achieved by this embodiment, refer to the foregoing method embodiments. Details are not described herein again.

Based on the foregoing embodiments, an embodiment of this application further provides a system. The system includes at least one apparatus used in a first device and at least one apparatus used in a second device. For technical effects that can be achieved by this embodiment, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the first device or the method performed by the second device in any one of the foregoing embodiments is implemented. The computer-readable storage medium may include any medium that can store program code, for example, a USB flash drive, a removable hard disk drive, a read-only memory, a random access memory, a magnetic disk, or an optical disc.

To implement functions of the apparatus in FIG. 17 to FIG. 20, an embodiment of this application further provides a chip, including a processor, configured to support the apparatus in implementing functions of the first device or the second device in the foregoing method embodiments. In a possible design, the chip is connected to a memory, or the chip includes a memory. The memory is configured to store a computer program or instructions and data necessary for the apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or the instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A radar information transmission method, comprising:
receiving, by a first device, a first radar signal, wherein the first radar signal carries information from at least one device;
obtaining, by the first device, first parsing data based on the first radar signal, wherein the first parsing data indicates one or more information points, and the one or more information points correspond to a second device in the at least one device; and
determining, by the first device, information from the second device based on a location of the one or more information points in the first parsing data.

2. The method according to claim 1, wherein the first radar signal carries information from a third device, and the third device belongs to the at least one device; and
all of one or more information points corresponding to the third device are different from any one of the one or more information points corresponding to the second device.

3. The method according to claim 1 or 2, wherein the information from the second device comprises one or more of the following:
a start frequency of the second device;
a bandwidth of the second device;
time-frequency resource information of the second device;
start time at which the second device sends a radar signal;
a period in which the second device sends a radar signal; or
target information detected by the second device.

4. The method according to any one of claims 1 to 3, further comprising:
performing, by the first device based on a preset mark point in the information point indicated by the first parsing data, time-domain and frequency-domain synchronization correction on the indicated information point.

5. The method according to any one of claims 1 to 4, further comprising:
receiving, by the first device, a second radar signal, wherein the second radar signal is used to detect a target; and
the first radar signal and the second radar signal occupy different frames.

6. The method according to any one of claims 1 to 4, further comprising:
receiving, by the first device, a second radar signal, wherein the second radar signal is used to detect a target; and
the first radar signal and the second radar signal occupy a same frame, and a time-frequency resource of the first radar signal is orthogonal to a time-frequency resource of the second radar signal.

7. The method according to any one of claims 1 to 6, wherein the first parsing data comprises at least one of the following:
range data, Doppler data, azimuth data, pitch data, two-dimensional range-Doppler data, range-Doppler-azimuth data, or range-Doppler-azimuth-pitch data.

8. The method according to any one of claims 1 to 7, wherein an initial frequency of the first radar signal is within a first bandwidth, the first bandwidth and a second bandwidth constitute an intermediate frequency bandwidth of the first device, and the first bandwidth and the second bandwidth do not overlap.

9. The method according to any one of claims 1 to 8, wherein a time domain resource occupied by the first radar signal is in a first time interval; and the method further comprises:
obtaining, by the first device, the first radar signal in a second time interval, wherein the second time interval belongs to the first time interval; and
the obtaining, by the first device, first parsing data based on the first radar signal comprises:
obtaining, by the first device, the first parsing data of the first radar signal in the second time interval.

10. A radar information transmission method, comprising:
modulating, by a second device, first information to obtain a first signal;
performing, by the second device, frequency mixing on the first signal and a frequency modulated continuous wave to obtain a first radar signal; and
sending, by the second device, the first radar signal.

11. The method according to claim 10, wherein the modulating, by a second device, first information to obtain a first signal comprises:
generating, by the second device, an information symbol based on the first information;
obtaining, by the second device, a time domain information symbol through inverse fast Fourier transform based on the information symbol; and
performing, by the second device, digital-to-analog conversion on the time domain information symbol to obtain the first signal.

12. The method according to claim 10 or 11, wherein the first information comprises one or more of the following:
a start frequency of the second device;
a bandwidth of the second device;
time-frequency resource information of the second device;
start time at which the second device sends a radar signal;
a period in which the second device sends a radar signal; or
target information detected by the second device.

13. The method according to any one of claims 10 to 12, further comprising:
sending, by the second device, a second radar signal, wherein the second radar signal is used to detect a target; and
the first radar signal and the second radar signal occupy different frames.

14. The method according to any one of claims 10 to 12, further comprising:
sending, by the second device, a second radar signal, wherein the second radar signal is used to detect a target; and
the first radar signal and the second radar signal occupy a same frame, and a time-frequency resource of the first radar signal is orthogonal to a time-frequency resource of the second radar signal.

15. The method according to any one of claims 10 to 14, wherein an initial frequency of the first radar signal is within a first bandwidth, the first bandwidth and a second bandwidth constitute an intermediate frequency bandwidth of the first device, and the first bandwidth and the second bandwidth do not overlap.

16. An apparatus, comprising a unit configured to perform the method according to any one of claims 1 to 9.

17. An apparatus, comprising a unit configured to perform the method according to any one of claims 10 to 15.

18. A computer-readable storage medium, wherein the computer-readable storage medium is configured to store a computer program, and when the computer program is run on a computer, the computer is enabled to perform the method according to any one of claims 1 to 9, or the computer is enabled to perform the method according to any one of claims 10 to 15.

19. A chip system, wherein the chip system comprises:
a communication interface; and
a processor, configured to: invoke and run instructions through the communication interface, to enable a device installed with the chip system to perform the method according to any one of claims 1 to 9, or to enable a device installed with the chip system to perform the method according to any one of claims 10 to 15.

20. A computer program product, wherein the computer program product comprises a computer program, and when the computer program is run on a computer, the computer is enabled to perform the method according to any one of claims 1 to 9, or the computer is enabled to perform the method according to any one of claims 10 to 15.
